**Europäisches Patentamt**

**European Patent Office**

**Office européen des brevets**

(19)

(11) **EP 1 351 209 A2**

(12) **EUROPEAN PATENT APPLICATION**

| | |
|---|---|
| (43) Date of publication:<br>**08.10.2003 Bulletin 2003/41** | (51) Int Cl.$^7$: **G09B 21/00** |
| (21) Application number: **03004257.6** | |
| (22) Date of filing: **26.02.2003** | |

| | |
|---|---|
| (84) Designated Contracting States:<br>**AT BE BG CH CY CZ DE DK EE ES FI FR GB GR HU IE IT LI LU MC NL PT SE SI SK TR**<br>Designated Extension States:<br>**AL LT LV MK RO** | (72) Inventors:<br>• **Sagawa, Hirohiko, Hitachi Ltd,**<br>  **Intell. Prop. Group**<br>  **Chiyoda-ku, Tokyo 100-8220 (JP)**<br>• **Takeuchi, Masaru, Hitachi Ltd,**<br>  **Intell. Prop. Group**<br>  **Chiyoda-ku, Tokyo 100-8220 (JP)** |
| (30) Priority: **05.04.2002 JP 2002103342** | |
| (71) Applicant: **Hitachi Ltd.**<br>**Tokyo (JP)** | (74) Representative: **Beetz & Partner Patentanwälte**<br>**Steinsdorfstrasse 10**<br>**80538 München (DE)** |

(54) **Sign language education system and program therefor**

(57)     The invention relates to an effective sign language learning system enabling a learner to practice learner's sign language acts while sequentially confirming learner's sign language acts and model sign language acts one at a time. Two adjacent characteristic hand points are extracted that each represent an end of an act from sign language act data to produce a model sign language animation image (1803, 1804, 1805). Two adjacent characteristic points are sensed from input learner's act data (801 of Fig. 8). The learner's sign language act data (1801) are compared to the sign language act data (1802) to produce the model sign language animation image between the adjacent characteristic points (816 of Fig. 8). If the difference between the data is in an acceptable range (images 1803 and 1805), similar processing is performed on sign language act data between next adjacent characteristic points (817 of Fig. 8). The type of display of the sign language animation image may be changed according to the result of the evaluation (Fig. 18) . If the evaluation result is low, a highlighted animation image is displayed.

**FIG. 18**

EP 1 351 209 A2

# EP 1 351 209 A2

**Description**

BACKGROUND OF THE INVENTION

The present invention relates to techniques for providing a sign language learner with an environment in which the learner can learn sign languages efficiently.

It is known that sign language education programs for providing a sign language learner with an environment in which a sign language is learned include "Everyone's sign languages" (K.K. NHK Educational/IBM Japan, Corp., "Your hands are whispering" (Fujitsu Middleware, Corp., 1996), "Languages to hands, Introduction Part" (Fujitsu, Corp., 1996), etc. In these techniques, video animation images for sign languages, the corresponding Japanese sentences, and explanations for the respective sign languages are provided simultaneously to learners to thereby allow the learners to learn the relationship in correspondence between sign language and Japanese language. Also, these techniques have the function of expressing a sign language animation image corresponding to a particular word in a Japanese sentence and the function of expressing a sign language animation image corresponding to a Japanese word selected by the learner from among the Japanese words displayed simultaneously. In addition, the "Languages to hands, Introduction Part" has the function of retrieving a sign language by selecting action elements, which compose the sign language, such as the shapes and directions of the hands' acts.

JP-A-2000-003127 discloses a technique for a sign language education program that uses sign language animations based on a three-dimensional computer graphics technique for displaying sign language animation images. This technique has the function of flexibly and selectively changing display of three kinds of sign language animation images, i.e. of sign language words, sign language sentences and conversation sentences in accordance with the learner's request to thereby allow the user to learn efficiently the relationship in correspondence between sign language and Japanese language.

JP-A-2000-330467 discloses a technique for a sign language education program using a sign language recognition technique, which evaluates the learner's sign language action and displays a result of the evaluation as a score. It also displays in a comparing manner a model sign language animation image and a sign language animation image produced from data on the learner's sign language acts. In this case, use of the sign language recognition techniques serves to eliminate a deviation in time between the model sign language animation image and the learner's sign language animation image to thereby simultaneously display expressions about the same thing given by both the learner's sign language animation image and the model sign language animation image to thereby facilitate the learner's comparison.

The core of the prior art sign language education techniques is to display to the learner the relationship in correspondence between sign language acts and Japanese sentences to thereby allow the learner to learn the sign language acts. In these methods, the learner can view and understand sign languages, but there is the problem that it is impossible to check to see whether or not the learner himself or herself has mastered the sign languages so that he or she can perform the sign language acts correctly. Usually, only by viewing and learning the sign language acts, the learner cannot actually reproduce the sign language acts in many cases. Therefore, such sign language education program is insufficient for the learner to master sign language communication completely.

JP-A-2000-330467 discloses a method of evaluating whether or not a learner's sign language action is correct, using a sign language recognition technique, and displays a result of the evaluation. Thus, the learner can confirm to which extent his or her sign language is appropriate. In this technique, learning is advanced in a process of inputting a collection of sign language acts in a general way, evaluating the sign language acts, and then displaying a result of the evaluation. The learner often desires to practice the sign language acts usually while confirming each of the acts. In this case, for example, the learner divides a sign language sentence action or its word acts into simple acts and advances the sign language action while sequentially confirming the simple acts one at a time. Although in the prior art the learner's sign language animation image and a model sign language image are displayed simultaneously, there is the problem with this method that the learner cannot easily determine which of all his or her acts was not correct. In order to achieve efficient sign language learning, it is desirable that the learner himself or herself can easily understand the problems with the learner's sign language acts.

It is therefore an object of the present invention to provide means for allowing the learner to practice his or her sign language acts while sequentially confirming the sign language acts and the model sign language acts one at a time in the course of learning the sign languages.

It is another object of the present invention to provide means for allowing the learner to easily confirm a problematic part of the sign language acts in the course of learning the sign languages to thereby learn the sign languages effectively.

It is thus an underlying problem of the present invention to provide a method or program and a system or device for sign language education.

The above problems are solved according to the independent claims. The dependent claims relate to preferred embodiments of the concept of the present invention.

SUMMARY OF THE INVENTION

In the present invention, a characteristic point representing an end of a sign language act is extracted from sign language act data to produce a model sign language animation image. The learner's sign language act data is then inputted, and it is then sensed that the learner's hand moved from a characteristic point to another. The learner's sign language act data between the adjacent characteristic points is compared to the corresponding sign language act data to produce a model sign language animation image. During these processes, the sign language animation image produced based on the learner's sign language act data and the model sign language act image are displayed simultaneously on the display screen. The speed of displaying the model sign language animation image is controlled, using a speed change model calculated based on the learner's act speed. If the difference between the learner's sign language act data and the sign language act data to produce the model sign language animation image is in an acceptable range, similar processes are performed on sign language act data between the next adjacent characteristic points. When the learner's sign language act data and the model sign language act data are compared and displayed, a type of display of the sign language animation image may be changed in accordance with a result of the evaluation.

Other objects, features and advantages of the invention will become apparent from the following description of the embodiments of the invention taken in conjunction with the accompanying drawings.

BRIEF DESCRIPTION OF THE DRAWINGS

FIG. 1 illustrates the composition of a sign language education apparatus to which the inventive program is applied;
FIG. 2 shows a format of an exemplary conversation sentence;
FIG. 3 shows a format of a sign language sentence;
FIG. 4 illustrates a menu picture displayed on the sign language education apparatus;
FIG. 5 illustrates a picture of an exemplary conversation sentence displayed;
FIG. 6 illustrates an act practicing pictures;
FIG. 7 shows a format of sign language act data;
FIG. 8 illustrates an algorithm that synchronously displays sign language images produced from the learner and model act data;
FIG. 9 illustrates characteristic points extracted from the model act data;
FIG. 10 is a speed change model to be used in the sign language act;
FIG. 11 illustrates an algorithm that changes model act data in accordance with a speed change calculated from the learner's act data;
FIG. 12 illustrates sign language animation images produced from the learner and model act data;
FIG. 13 illustrates a displayed message that urges the learner to input his or her sign language acts;
FIG. 14 illustrates an image displayed depending on the input condition of the learner's act data;
FIG. 15 shows a format of a result of evaluation of the learner's act data;
FIG. 16 is a format of learning history information of the learner's act data;
FIG. 17 illustrates a picture that displays a result of evaluation of the learner's act data;
FIG. 18 shows a picture that has changed a background of the act image involving the learner's act data whose evaluation is low;
FIG. 19 illustrates a picture that has changed the color of the learner's hand at a place where the evaluation of the act was low;
FIG. 20 illustrates a message displayed at a place where the evaluation of the learner's act was low; and
FIG. 21 illustrates a locus of the learner's act at a place where the evaluation of the learner's act was low.

DESCRIPTION OF THE EMBODIMENTS

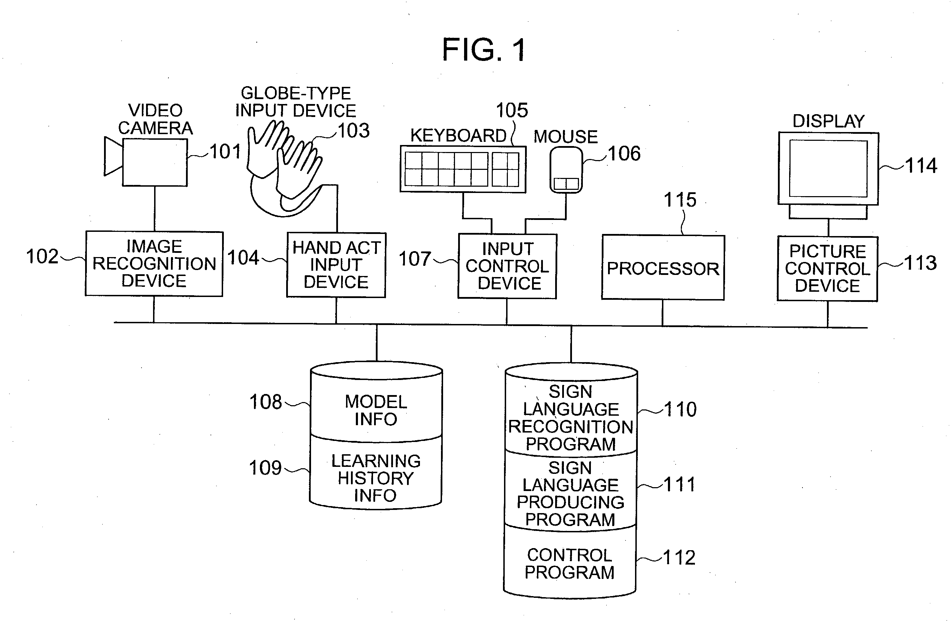

One embodiment of the present invention will be described next with reference to FIGS. 1-21 of the accompanying drawings.
FIG. 1 illustrates the constitution of a sign language education system to which the inventive program is applied. In FIG. 1, reference numeral 101 denotes a video camera to which a learner's sign language act data is input. Numeral 102 denotes an image recognition device that converts a video signal received from the video camera 101 to an electric signal as animation image data, recognizes the learner's acts required for expressing sign languages such as his or her hand/head acts from the input animation image data, and converts these recognized data to sign language act data as multidimensional time-series data. In order to convert the hand animation image data to sign language act data, the technique disclosed in JP-A-11-174948 is available. In order to convert the learner's expression and hand acts to sign language act data, the method disclosed in JP-A-06-067601 and "Head Act Analysis for Supporting Japanese Sign Language Automatic Translation" (the 51st Pattern Measurement Section, the Society of Instrument and Control Engineers, pp.29-33, April 21, 2000) may be used. Numeral 103 denotes a globe-type input device to which hand act data is inputted in a sign language. Such input device may be a well-known globe-type input device in which sensors are set in position in a pair of globes to thereby convert easily the shapes and acts of the learner's hands to electric signals of sign language data. A hand act converter 104 converts the electric signal received from the globe-type input device 103 to multidimensional time-series sign language act data representing bend angles and positions of the fingers of the learner's hands. A keyboard 105 and a mouse 106 are input devices to operate the picture on the display screen and may be well-known ones. An input control device 107 converts signals inputted by the keyboard 105 and mouse 106 to picture control signals. Numerals 108-112 show information and programs stored in a memory.

Model information 108 has stored information on a plurality of illustrative conversation sentence groups required for learning the sign languages and on sign language sentences composing each conversation sentence group, relevant information such as explanations about the illustrative conversation sentence groups and their respective sign language sentences, and data for displaying sign language animation images and recognizing the sign language words. Learning history information 109 has stored a history of evaluation results of the learner's sign language acts for the respective sign language sentences.

The sign language recognition program 110 recognizes respective sign language words expressed in the sign language act data inputted by the image input device 102 and the hand act input device 104. An available technique for recognizing the sign language words is disclosed, for example, in JP-A-10-208023. A sign language producing program 111 produces sign language animation images based on the information stored in the model information 108. A picture control device 113 displays on a display 114 a sign language animation image produced by the sign language producing program 111 and information associated with the sign language animation image stored in the model information.

A control program 112 is executed by a processor 115 to control inputting/outputting of information to/from the model information 108 and the learning history information 109 and operation of the image recognition device 102, hand act input device 104, sign language recognition program 110, sign language producing program 111 and picture control device 113.

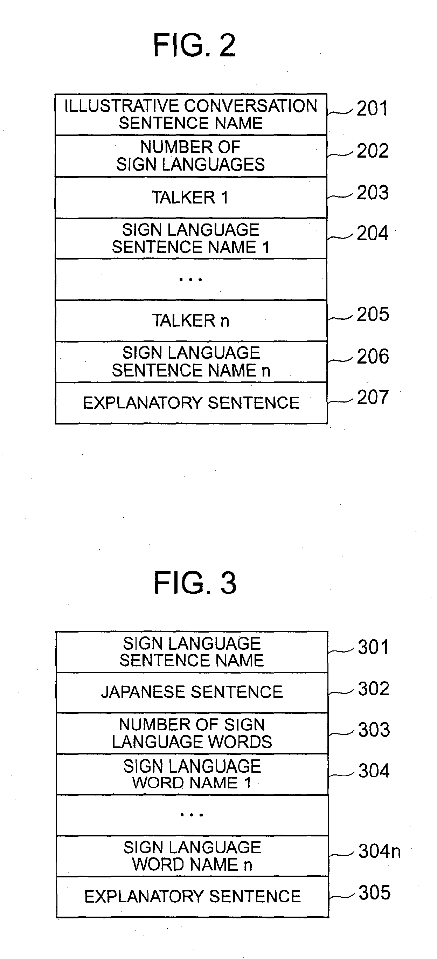

FIG. 2 shows a format of each of illustrative conversation sentences stored in the model information 108. In FIG. 2, numeral 201 denotes the name of the illustrative conversation sentence. Numeral 201 denotes the number of sign languages sentences contained in the illustrative conversation sentence. Numerals 203 and 205 denote the names of talkers corresponding to the sign language sentences. Numerals 204 and 206 denote sign language sentences. Numeral 207 denote information required for the sign language education such as notices about the contents and expression of the illustrative conversation sentence.

FIG. 3 shows a format of each of the sign language sentences contained in each illustrative conversation sentence group. In FIG. 3, numeral 301 denotes the name of a sign language sentence and is shown by 204 or 206 in FIG. 2. Numeral 302 denotes a Japanese sentence that represents the meaning of a sign language sentence. Numeral 303 denotes the number of sign language words contained in the sign language sentence. Numerals 3041-304n denote the names of the words of the sign language sentence. Numeral 306 denotes information required for sign language education such as notices about the contents and expression of the sign language sentence.

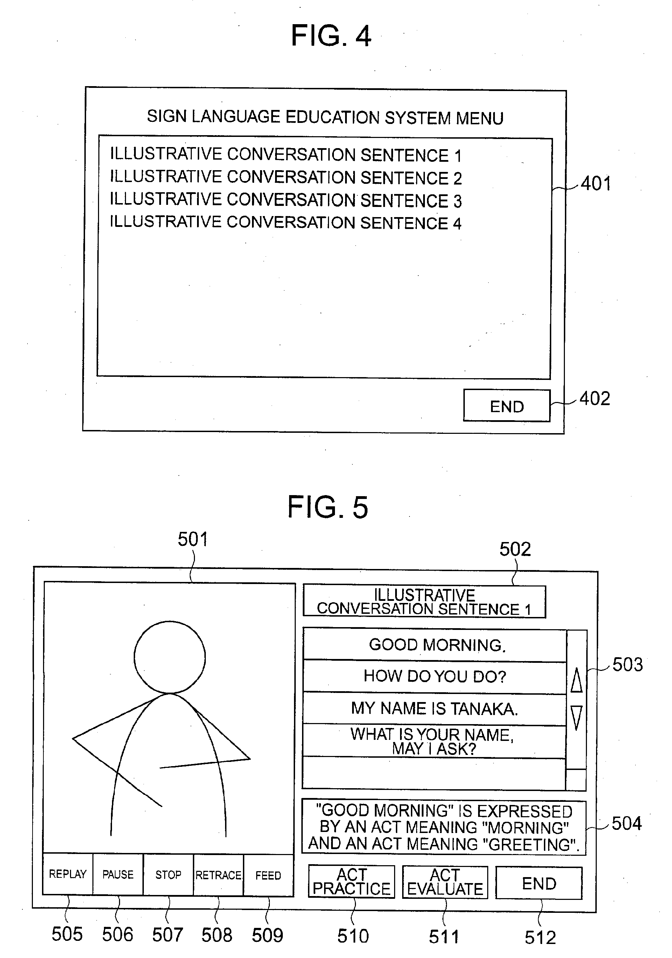

FIG. 4 illustrates a menu picture of the sign language education system of FIG. 1. In FIG. 4, numeral 401 denotes an area for simultaneously displaying a plurality of illustrative conversation sentence groups 1, 2, 3 and 4 (201 in FIG. 2) stored in the model information 108. Numeral 402 denotes a button to be used to terminate the processing of the sign language education system. In FIG. 4, when a desired one of the plurality of illustrative conversation sentence groups 1, 2, 3 and 4 is clicked with a mouse, the sign language sentences composing the clicked sentence group will be displayed.

FIG. 5 shows one example of a displayed picture of those sign language sentences. In FIG. 5, numeral 501 denotes an area where a sign language animation image is displayed corresponding to each of the sign language sentences. Numeral 502 denotes an area where the selected illustrative conversation sentence group is displayed. Numeral 503 denotes an area where the sign language sentences of the selected illustrative conversation sentence group and each expressing the Japanese sentence 302 or the name of the sign language sentence 301 of FIG. 3 are displayed. Numeral 504 denotes an area where information on the sign language sentences (an explanatory sentence 306 of FIG. 3) is displayed. By clicking a desired sign language sentence on the area 503, information on the clicked sentence is displayed on the area 504. Numeral 505 denotes a button to be used to start display of a sign language animation image. Numeral 506 denotes a button to be used to temporarily stop the display of the sign language animation image. Numeral 507 denotes a button to be used to stop the display of the sign language animation image.

Numeral 508 denotes a button to be used to retrace a displayed sign language animation image. Numeral 509 denotes a button to be used to fast feed a displayed sign language animation image. Numeral 510 denotes a button to be used to start up the function of assisting in the learner's practicing of sign language acts while viewing a sign language animation image produced based on the learner's sign language act data and a sign language animation image produced based on the corresponding model information that are displayed in a comparing manner. Numeral 511 denotes a button to be used to start up the function of evaluating the learner's sign language acts. Numeral 512 denotes a button to be used to terminate the display of the sign language sentences of the illustrative conversation sentence group. When a desired one of the sign language sentences displayed in the area 503 is clicked with the mouse, a sign language animation image for the clicked sign language sentence is enabled to be displayed and display of the sign language animation image can be controlled, using the buttons 505-509. A sign language animation image is produced based on the names of the words 304-1304n of the sign language sentence. To this end, a technique for producing a sign language animation image disclosed in JP-A-08-016821 is avaiable.

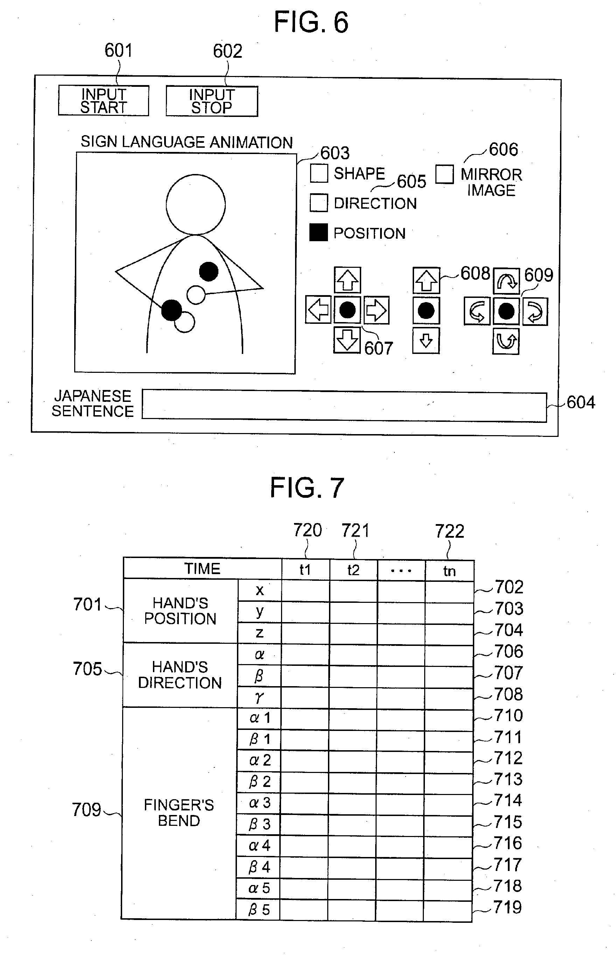

When one of the sign language sentences displayed in the area 503 and then the button 509 are clicked with the mouse, a picture of FIG. 6 for practicing the sign language acts is displayed. In FIG. 6, numeral 601 denotes a button to be used to start to input the learner's sign language acts. Numeral 602 denotes a button to be used to stop inputting the learner's sign language acts. Numeral 603 denotes an area where a sign language animation image produced based on the sign language act data inputted by the learner and a sign language animation image produced based on the model information are displayed in a comparing manner. Numeral 604 denotes an area where a Japanese sentence corresponding to a sign language sentence for practicing purposes is displayed. Numeral 605 denotes check boxes to be checked off with the mouse by the learner to select the respective ones of sign language animation images representing the shape, direction and position of the learner's hands on demand to thereby display the selected animation image for confirming purposes. Some or all of the boxes can be together checked off to display combined animation images. The technique for selecting the shapes, directions and positions of the learner's hands is disclosed in JP-A-08-016821. When, for example, only the shapes of the hands are selected, only the hands' images are displayed on the area 603. When, for example, only the positions of the hands are selected, animation images representing changes in the positions of the hands are displayed. Numeral 606 denotes a check box to be checked off to specify whether a mirror image for the sign language animation image displayed on the area 603 should be presented. When the sign language acts are to be learned, it is often effective to display a mirror image for a model sign language animation image. By checking off the check box 606 with the mouse, the sign language image to be displayed on the area 603 becomes a mirror image for the sign language animation image. Numeral 607 denotes buttons to be used to change upwards, downwards, rightwards and leftwards the position of a character that expresses sign languages in the image displayed on the area 603. A central one of the buttons 607 is used to return the character image to its initial position. Numeral 608 denotes buttons to be used to change the size of the character on the area 603. A central one of the buttons 608 is used to return the size of the character to its initial area. Numeral 609 denotes buttons to be used to change the direction of the character on the area 603. A central one of the buttons 609 is used to return the direction of the model to its initial one.

In FIG. 6, when checking the area 601 with the mouse, the learner can input his or her sign language acts to thereby display a model sign language animation image and the learner's sign language animation image simultaneously on the area 603 so that the learner can practice his or her sign language acts while confirming the displayed picture. A flow of processing to be performed when the button 601 is clicked with the mouse will be described next in detail with reference to FIGS. 7-12. FIG. 7 illustrates a format of sign language act data that will be inputted by the image recognition device 102 or the hand act input device or converter 104. In FIG. 7, numeral 701 denotes data on the position of each of the learner's hands. Numerals 702, 703 and 704 denote coordinates on X-, Y- and Z- axes, respectively. Numeral 705 denotes data on the direction of each of the learner's hands. Numerals 706, 707 and 708 denote rotational angles around the X-, Y- and Z- axes, respectively. Numeral 709 denotes data on the shape of each of the learner's hands. Numerals 710 and 711 denote bend angles of the proximal and middle phalaness, respectively, of the thumb. Numerals 712 and 713 denote bend angles of the proximal and middle phalanges, respectively, of the forefinger. Numerals 714 and 715 denote bend angles of the proximal and middle phalanges, respectively, of the middle finger. Numerals 716 and 717 denote bend angles of the proximal and middle phalanges, respectively, of the ring finger. Numerals 718 and 719 denote bend angles of the proximal and middle phalanges, respectively, of the little finger. Numerals 720, 721, ..., and 72n denote first, second, ..., and $n^{th}$ frame data, respectively. As just described above, the sign language act data is expressed as multidimensional time-series data. Model sign language act data can also be produced easily as multidimensional time-series data based on information on the sign language sentences of FIG. 3 by using the techniques disclosed in JP-A-08-016821. Also, the sign language animation images can be produced, using similar techniques.

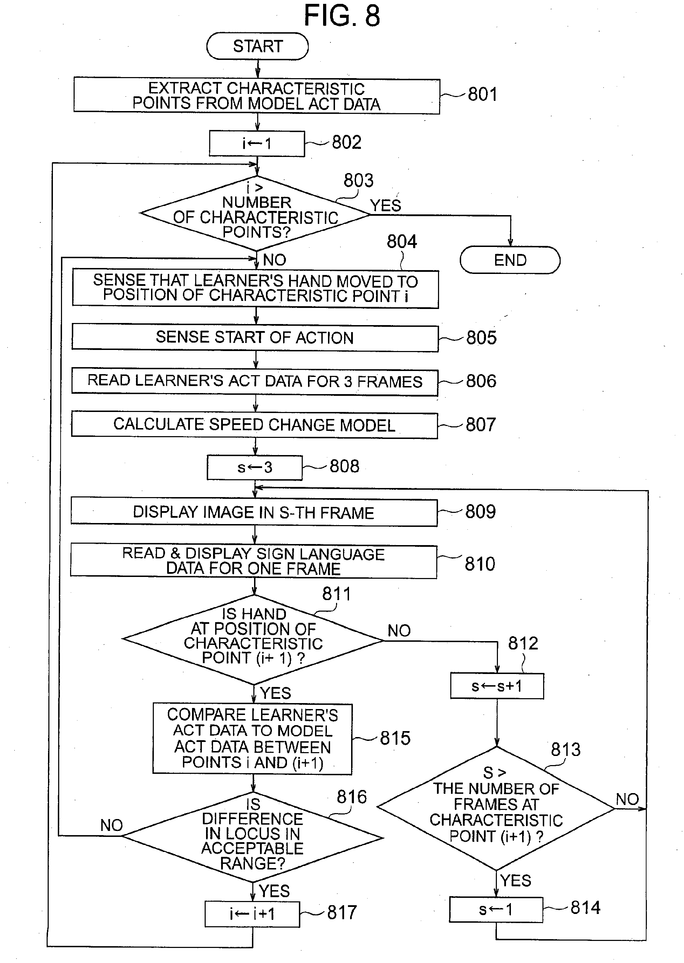

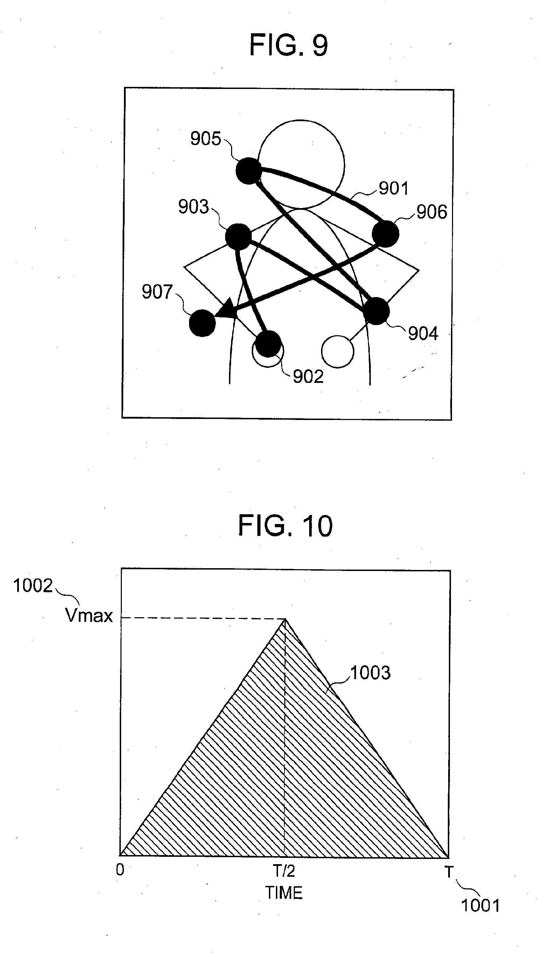

FIG. 8 shows an algorithm to produce and display sign language animation images from the model information in synchronism with the learner's acts. In step 801 of FIG. 8, a characteristic point indicating the end of a sign language act is extracted from the sign language act data produced from the model information (hereinafter referred to as model act data). In order to sense the end of the sign language act, the technique disclosed in JP-A-2000-284682 is available. The start and end times of the respective sign language words of a sign language sentence may be used as characteristic points. Alternatively, information on the characteristic points may be stored beforehand along with the model act data. FIG. 9 illustrates sensing characteristic points from the sign language act data. In FIG. 9, numeral 901 denotes a locus of acts. Numerals 902, 903, 904, 905, 906 and 907 denote the sensed characteristic points. As just described, the sign language act images will be displayed, using as ends the points where the action change greatly. In step 802, an initial value of 1 is then substituted into a variable i representing the number of the characteristic point. In step 803, it is then determined whether the value of the variable i is larger than the number of characteristic points. If so, the processing is terminated. When the variable i is smaller than the number of characteristic points, step 804 is next, where it is sensed that each of the learner's hands has moved to the position of the characteristic point I concerned. To this end, the learner's sign language act data (hereinafter referred to as the learner's act data) may be inputted while calculating the distance between the coordinates of the position of the learner's hand and the coordinates of the position of the characteristic point I concerned. If the distance is in a predetermined threshold, it should be determined that the learner's hand has moved to the position of the characteristic point i. In order to calculate the distance, an Euclidean distance used commonly may be used. In step 805, it is sensed that the learner's sign language act has started. To this end, as in step 804, the distance between the coordinates of each of the learner's hand positions and the coordinates of the position of the characteristic point i concerned is calculated. If the calculated distance is greater than the predetermined threshold, it is determined that the learner's sign language act has started.

Step 806 reads the learner's act data for three frames since it was determined that learner's sign language act started. Then, in step 807 a prediction value of a change in the speed of the learner's act data from the characteristic point i to a characteristic point (i + 1) is calculated based on the learner's act data read in step 806, and model act data for displaying purposes is then produced based on the prediction value. The change in the speed of the learner's act data can be calculated in the following method based on an assumption that it depicts a mountain-like speed change model such as is shown in FIG. 10. In FIG. 10, T (1001) represents a movement time and Vmax (1002) a maximum speed value. Speed change models available include a model such as a parabolic model used generally to produce an act locus, in addition to the mountain-type model of FIG. 10. Let a first frame where a sign language act started at the characteristic point i be a frame 0. Also, let the positional coordinates of the respective frames for sign language act data read in step 806 be P (0), P (1) and P(2). Let a time interval between adjacent frames be F. By using P (0), P (1) and P(2), a prediction value of a gradient K of a straight line in the speed change model of FIG. 10 is calculated by

$$K = \frac{(P(2) - P(1)) - (P(1) - P(0))}{F} \tag{1}$$

A prediction value Tp of the movement time is calculated by

$$Tp = 2\sqrt{\frac{L}{K}} \tag{2}$$

where L is the length of the locus depicted from the characteristic point i to the characteristic point (i+1).

A movement time Tc from the characteristic point i of the model act data to its characteristic point (i+1) is set to a value somewhat greater than the prediction value Tp, that is, so that $Tc = \alpha Tp$ where $\alpha$ is a value smaller than 1. In the display of the sign language animation image, Tc is divided into N frames calculated in accordance with Expression (3)

$$N = Int\left(\frac{Tc}{F}\right) \tag{3}$$

where int (x) is a function of x and represents that a fragment of x is rounded off to provide an integer portion of x. For example, int (1.2) = 1.

By using N, F and L and the speed change model of FIG. 10, a distance L (n) from the characteristic point i to a characteristic point i in an $n^{th}$ frame is calculated by

$$L(n) = \begin{cases} \dfrac{2LF^2 n^2}{Tc^2} & \left(Fn < \dfrac{Tc}{2}\right) \\[3ex] L - \dfrac{2L}{Tc^2}(Tc - Fn)^2 & \left(\dfrac{Tc}{2} \le Fn \le Tc\right) \end{cases} \qquad (4)$$

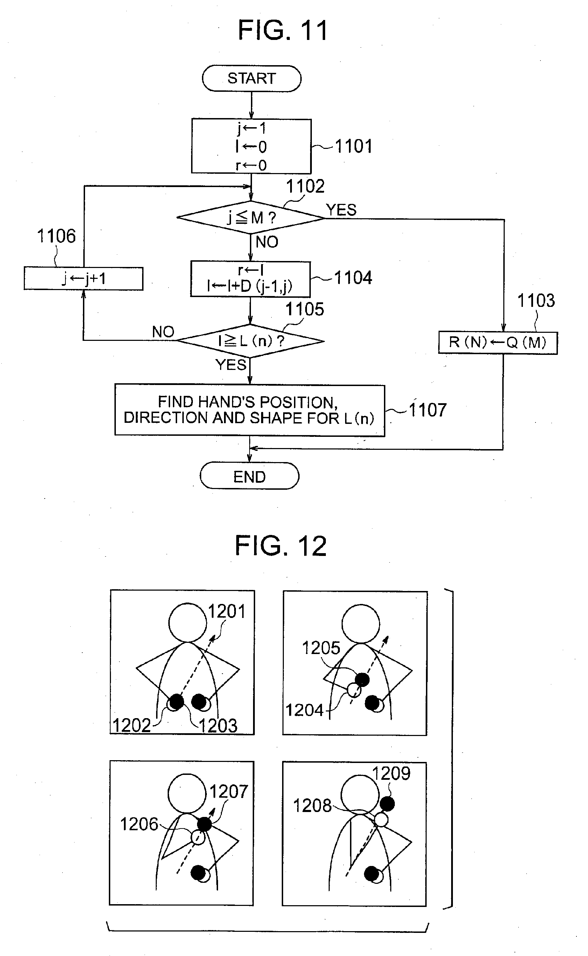

The positional coordinates R (n) of the each hand for display model act data in the $n^{th}$ frame are calculated in an algorithm of FIG. 11 where M is the number of frames present between the characteristic point i and the characteristic point (i + 1) in the original model act data, m is the number of frames counted from the characteristic point i, and Q (m) is the coordinate data for the hand in an $m^{th}$ frame. In step 1101 of FIG. 11, an initial value of 1 is substituted into a variable j representing the number of frames present after the characteristic point i of the original model animation image data, and an initial value of 0 is substituted into each of variables l and r representing a distance from the characteristic point i. In step 1102, it is determined whether j is not larger than M. If so, step 1103 is next in which Q (M) is substituted into R (N) to thereby terminate the processing. If j is larger than M in step 1102, step 1104 is next, in which 1 is substituted into r and then D (j-1, j) is added to 1 where D (x, y) is the distance between the position of the learner' hand in an $x^{th}$ frame from the characteristic point i in the original sign language act data and the position of the learner's hand in a $y^{th}$ frame. In step 1105, it is determined whether l is larger than L (n). If l is smaller than L (n), step 1106 is next in which l is added to j, and then control returns to step 1102. If l is not less than L (n) in step 1105, step 1107 is next, in which the position Q (n) of each hand in L (n) is calculated based on j, l and r in accordance with Expression (5). In step 1107, the shape and direction of each hand in the $n^{th}$ frame can be easily calculated by similarly calculating the shape and direction of the hand in each of (j-1) and j frames.

$$P(n) = \frac{Q(j) - Q(j\text{-}1)}{|Q(j) - Q(j\text{-}1)|} \cdot \frac{L(n)\text{-}r}{l\text{-}r} + Q(j\text{-}1) \qquad (5)$$

In step 808 of FIG. 8, an initial value of 3 is substituted into a variable s representing a frame displayed in the display model act data obtained in step 807. In order to read sign language act data for three frames at the start of the learner's action, model act data starts to be displayed at its the third frame. In step 809, a sign language animation image for a $s^{th}$ frame of the display model act data is displayed. In step 810, the learner's act data for one frame is read and a sign language animation image produced from the read learner's act data is then displayed. In step 811, it is determined whether each of the learner's hands has moved to the position of the characteristic point (i +1). In this determination, the distance between the positional coordinates of each of the learner's hands and the positional coordinates of the characteristic point (i +1) is calculated as in step 804. If the distance is in a predetermined threshold, it can be determined that the learner's hand has moved to the position of the characteristic point (i +1). If it is determined that the position of the learner's hand is at the characteristic point (i +1), step 812 is next in which 1 is added to the variable s. In step 813, it is determined whether the value of the variable s is larger than N that represents the number of frames at the characteristic point (i+1). If not, control returns to step 809. If it is larger, step 814 is next, in which the initial value of 1 is substituted into the variable s. Control then returns to step 809. When it is determined in step 811 that the learner's hand is at the position of the characteristic point (j+1), step 815 is next, in which the learner's act data is compared to the model act data between the characteristic points i and (i+1). Such comparison can be easily made, using a method disclosed, for example, in JP-A-06-083938. In step 816, it is then determined based on a result of the comparison in step 815 whether the difference between the learner's act data and the model act data is in an allowable range. If so, step 817 is next, in which 1 is added to the variable i. Then, control returns to step 803. If the difference is not in the allowable range in step 816, control then returns to step 804.

The sign language animation image produced based on the model act data and the learner's act data, using the algorithm, is displayed as shown in FIG. 12. In FIG. 12, numeral 1201 denotes a locus of the model act data, numerals 1202, 1204, 1206 and 1208 denote sign language animation images produced based on the learner's act data, numerals 1203, 1205, 1207 and 1209 denote sign language animation images produced from the model act data, and numerals 1202 and 1203 denote the sign language animation images at the start of the sign language acts. When the learner's sign language acts start, the sign language animation image produced from the model act data is displayed before the sign language animation image produced from the learner's act data is displayed.

In the above-mentioned algorithm, the display of the sign language animation image was illustrated as controlled, using the model act data calculated in step 807. Alternatively, each time the learner's sign language act data is read in step 810, the model act data may be corrected to the learner's action speed at that time. While in the above-mentioned algorithm no model act data is displayed until it is sensed in step 804 that the learner's hand is at the position of the characteristic point i, the sign language animation image appearing from the characteristic point i to the characteristic point (i +1) may be repeatedly displayed in accordance with a predetermined speed change model, and a speed change model to be newly used may be displayed for the first time when the learner's action has started. Alternatively, a sign language animation image may be only produced from the model act data in accordance with a predetermined speed change model and then displayed. With the algorithm of FIG. 8, when the difference between the learner's act data and the model act data is determined as to be out of the acceptable range in step 815, the display of the sign language animation image produced from the model sign language act data may be stopped and not displayed until it is sensed that the learner's act data starts at the characteristic point i. However, the sign language animation image may continue to be displayed.

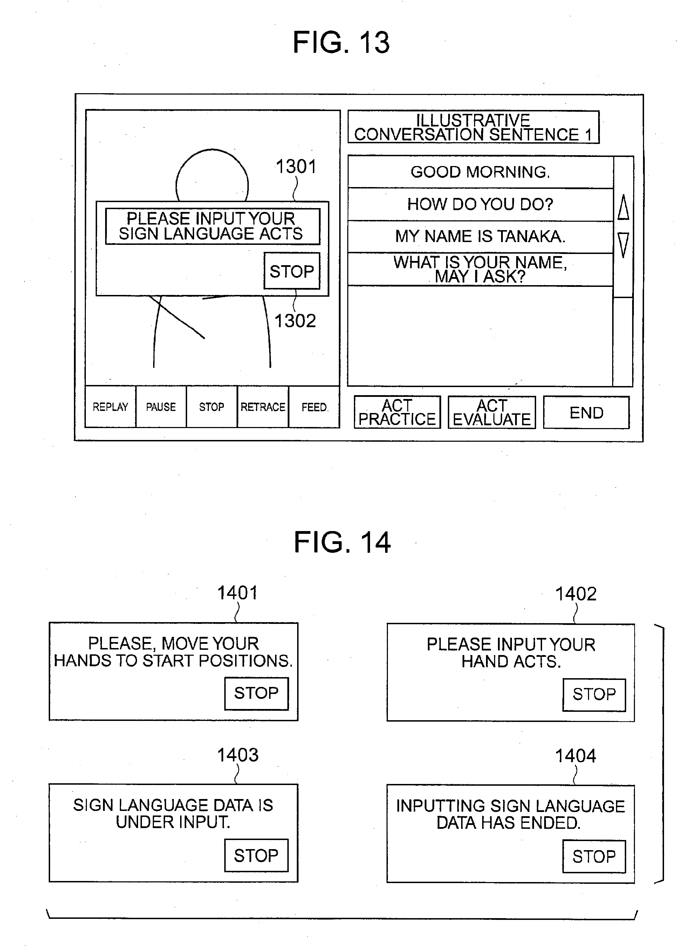

In FIG. 5, when one of the sign language sentences displayed on the area 503 and then the button 511 are clicked with the mouse, a window 1301 of FIG. 13 appears that displays thereon a message which urges the learner to input his or her sign language acts. Thus, the image recognition device 102 and the hand act converter 104 of FIG. 1 are actuated so as to enable the learner's act data to be inputted. A button 1302 displayed on the window 1301 is used to stop inputting the learner's act data. In order to sense the start of the learner's sign language acts, a predetermined key provided on the keyboard 105 or a predetermined button provided on the mouse 106 may be depressed when the sign language acts should be started or terminated. Alternatively, a button displayed on the window 1301 may be clicked with the mouse to start/terminate the sign language acts. JP-A-07-311545 discloses that sign language act data representing the position and direction of each of the learner's hands or their combination that indicate the start and end of the learner's sign language acts are registered beforehand and that a time when the registered sign language act data coincides with the learner's act data is sensed as a time when the sign language acts start or end. When this technique is used, a message that informs the learner of the input conditions of data is displayed on the window 1301, as shown in FIG. 14. FIG. 14 displays on a window 1401 a message indicating that the learner's act data waits for its coincidence with the sign language act data indicative of the start of the learner's acts. When the learner's act data coincides with the sign language act data indicative of the start of the learner's act, a message is displayed which urges the learner to start his or her sign language acts, as shown in a window 1402. When it is sensed that the learner's sign language act data becomes non-coincident with the sign language act data indicative of the start of his or her act, a message is indicated that the learner's act data is under input, as shown in a window 1403. When it is sensed that the learner's act data coincides with sign language act data indicating the end of his or her action, a message is displayed which indicates that inputting the learner's act data is terminated and that the learner's act data is under evaluation, as shown in a window 1404.

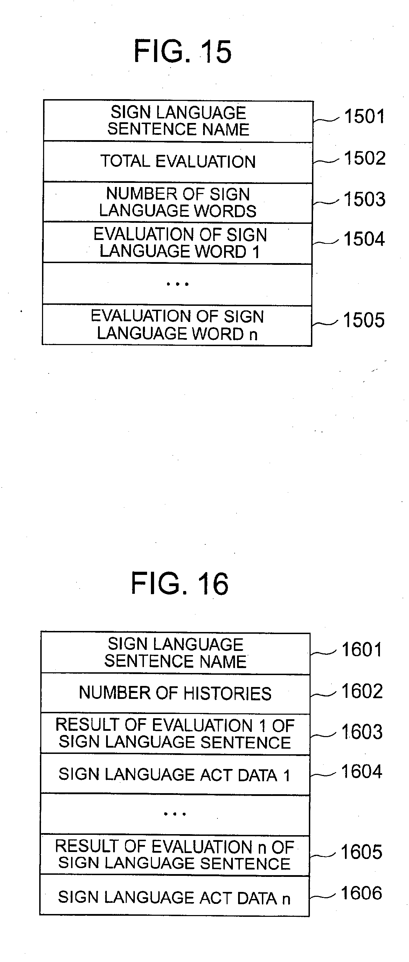

For evaluating purposes, the sign language recognition program 110 is used. By using the technique disclosed in JP-A-10-208023, a result of evaluation of the learner's act data is provided in a format of FIG. 15. In FIG. 15, numeral 1501 denotes the name of a sign language sentence similar to the name of the sign language sentence 301 shown in FIG. 3. Numeral 1502 denotes a score that represents a result of evaluation of the entire sign language sentence and can be graded, for example, out of a hundred. Numeral 1503 denotes the number of sign language words contained in the sign language sentence. Numerals 15041-1504n denote respective results of evaluation of the sign language words contained in the sign language sentence. Like the score 1502, each result can be graded out of a hundred. The result of evaluation of each sign language sentence is stored as history information in the learning history information 109 of FIG. 1. A format of the learning history information is shown in FIG. 16. In FIG. 16, numeral 1601 denotes the name of a sign language sentence. Numeral 1602 denotes the number of items of learning history information stored. Numerals 1603 and 1605 denote results of evaluation of the sign language sentences and expressed by the information represented by the format of FIG. 15. Numerals 16041 and 1604n denote the evaluated learner's act data represented by the format of FIG. 7. Furthermore, the history information may include the learner's name, date, and time, etc.

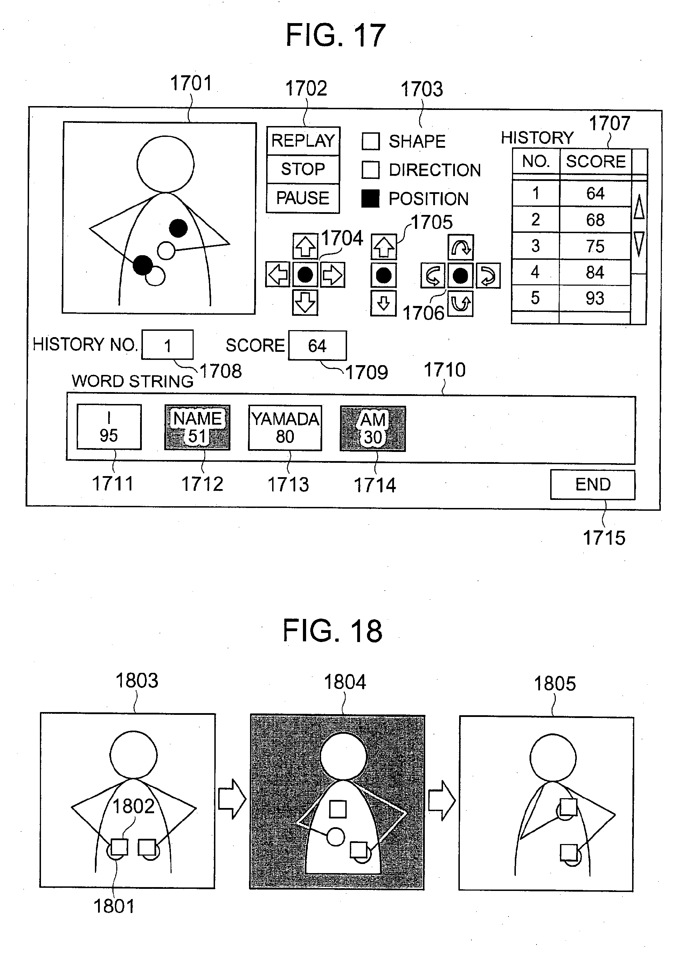

When the evaluation of the learner's act data ends, a result of the evaluation is displayed on the display screen of FIG. 17. In FIG. 17, numeral 1701 denotes an area that displays a sign language animation image produced based on the model act data and the learner's act data, and numeral 1702 denotes buttons that respectively control the reproduction, stop and pause of reproduction of the sign language animation image. Numeral 1703 denotes buttons to be used to select information to be displayed as an sign language animation image, for example, items of information on the shape, direction and position of each of the learner's hands to thereby display them separately or in combination. For example, when only the shape of each hand is selected, it is displayed in the area 1701. When the position of the hand is selected, an animation image representing a change in the position of the hand is displayed in the area 1701. Numeral 1704 denotes buttons to be used vertically and horizontally to change the position of a character that expresses a sign language in the sign language animation image. A central one of the buttons 1704 is used to return the character to its initial position. Numeral 1705 denotes buttons to be used to change the size of the character on the window 1701. A central one of the buttons 1705 is used to return the size of the character to its initial one. Numeral 1706 denotes buttons to be used to change the direction of the character in the area 1701. A central one of the buttons 1706 is used to return the direction of the character to its initial one.

In FIG. 17, numeral 1707 denotes a picture that displays history of evaluation of the learner's act data. In the picture 1707, serial numbers given in order of evaluation and the corresponding scores representing the results of evaluation of all the sign language sentences are displayed. The history can be displayed in order of high evaluation score or vice versa. Alternatively, in addition to the serial numbers and the corresponding results of the evaluation, any part of information on the sign language of FIG. 3 may be selectively displayed. When one of the results of the evaluation displayed in the history 1707 is clicked with the mouse, the number of the clicked result of the evaluation and the corresponding score are displayed in 1708 and 1709, respectively. A result of detailed evaluation of the sign language sentence is displayed in an area 1710. The results in 1708 and 1709 can be easily changed depending on the displayed contents of the history 1707.

The result of detailed evaluation of the sign language sentence displayed in the area 1710 is based on information on the result of evaluation of the sign language sentence of FIG. 15. In the area 1710, the sign language word names and the corresponding scores are displayed in 1711, 1712, 1713 and 1714, respectively, in two stages. In this case, a type of the display is changed depending on the result of evaluation so that the learner can easily understand his or her act that gained low evaluation. For example, assume that the evaluation is represented by a score. It can be determined that the evaluation is high when the score is higher than a predetermined reference and that the evaluation is low when the score is lower than the reference. The determination can be performed easily in three or more ranks. Alternatively, the evaluation may be given in one of a plurality of different colors each representing a respective one of the different degrees of evaluation. Otherwise, the evaluation may be given in one of a plurality of different sizes of color areas or in one of a plurality of different characters. As an alternative, the evaluation may be given in a combination of some of different colors, different sizes of color areas, and different characters.

In FIG. 17, numeral 1715 denotes a button to be used to terminate the display of the result of the evaluation.

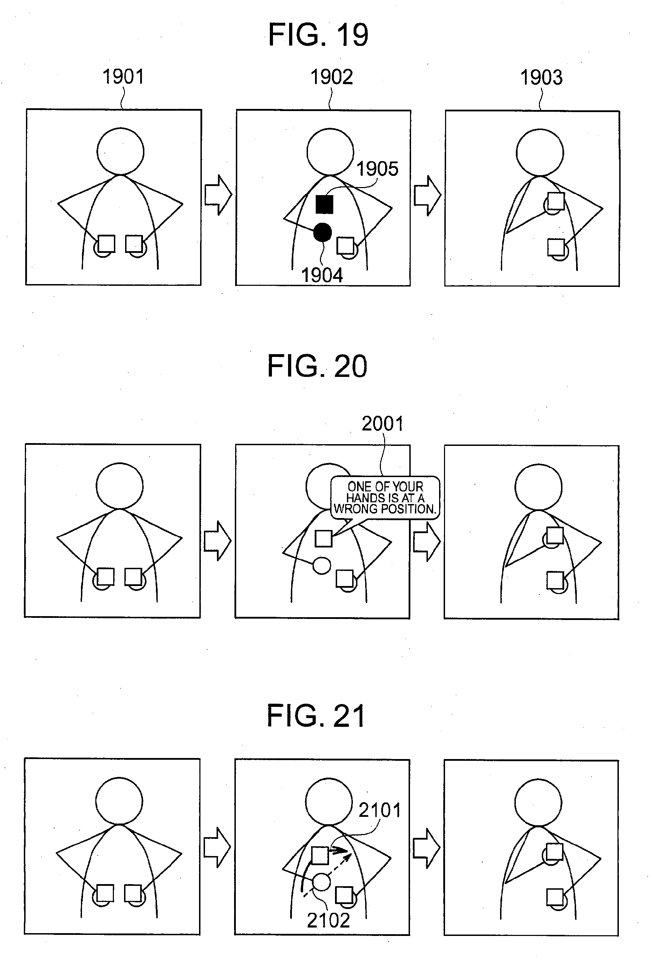

When the sign language word displayed in one of the areas 1711, 1712, 1713 and 1714 and then the "REPLAY" button in 1702 are clicked with the mouse, a sign language animation image corresponding to the clicked sign language word is displayed. When an area other than the areas where information on the respective sign language words in the area 1710 is displayed and then the replay button in 1702 are clicked with the mouse, a sign language animation image corresponding to the sign language sentence concerned is displayed. When the words of the sign language sentence are expressed in the display of its sign language animation image, the same sign language words may be displayed simultaneously on the window 1701. A type of display of the sign language animation image is changed in accordance with a result of the evaluation such that the learner can easily understand his or her act that gained the high and low evaluations. A method of changing the type of displaying the sign language animation image will be described with reference to FIGS. 18-21. In FIG. 18, it is illustrated that the color of a background of the sign language animation image is changed in accordance with a result of the evaluation. In FIG, 18, numeral 1801 denotes a sign language animation image produced from the learner's act data, and numeral 1802 denotes a sign language animation image produced from the model act data. Numerals 1803 and 1805 denote sign language animation images whose evaluation was high whereas numeral 1804 denotes a sign language animation image whose evaluation was low. The color of the background can be set, as mentioned above. In addition to the color of the background, a pattern of the background and a combination of the background color and pattern may be used to express the result of the evaluation. FIG. 19 illustrates that the colors of the hands to be displayed may be changed depending on a result of the evaluation. In FIG. 19, numerals 1901 and 1903 denote the sign language act animation images that gained high evaluation whereas numerals 1902 denote a sign language animation image that gained low evaluation. The hands 1904 and 1905 of the sign language animation image in the picture 1902 are displayed in colors different from those of the images in the pictures 1901 and 1903.

In FIG. 20, a message 2001 indicating a reason why the evaluation is low is displayed on the sign language animation image at a place where the evaluation is low. For example, it is easy to output a result of evaluation of each of the components of the sign language action such as the shapes or directions of the learner's hands, using the method disclosed in JP-A-10-208023. By using this method, it can be indicated which of the components of the sign language act ion brought about the low evaluation. For example, when a result of evaluation of each component is expressed as a score, a reference value for the score is. set beforehand. In addition, messages are prepared that are to be used when the scores for the components are higher and lower, respectively, than the reference value. If the score obtained as a result of the evaluation of the element is compared to the reference value, and a relevant message is selected and displayed, display of FIG. 20 is easily realized. In addition, if a plurality of different reference values and a plurality of different messages are prepared and a message is selected from among the messages depending on the score obtained, more detailed information will be displayed. Thus, when the evaluation of some of the plurality of elements is low, a display can be made that enables the learner to determine how the evaluation of each of the components is low. The score obtained as a result of the evaluation may be displayed for each component. Alternatively, a display including a combination of a message and the score may be easily realized. Otherwise, the message may be displayed on a picture other than that on which the sign language animation image is displayed. By using the result of evaluation of each component, an element whose evaluation is low may be displayed in a different display color, background color or pattern in the display method of FIG. 18 or 19.

In FIG. 21, the act loci in the model act data and the learner's act data are displayed as shown by 2101 and 2102, respectively, at positions of the elements whose evaluation was low. The act loci should be displayed only when the relevant act locus in the learner's act data is evaluated as low. The respective display methods described with reference to FIGS. 18-21 may be combined optionally for displaying purposes.

According to the present invention, the learner of the sign languages can easily confirm a difference between the learner's sign language acts and the model sign language acts on the picture while expressing his or her sign language acts. The learner also can practice his or her sign language acts while dividing his or her entire action into acts and confirming whether or not the respective divided acts are expressed appropriately. By changing a type of display of the evaluation of the learner's sign language acts depending on the result of the evaluation, the learner can easily understand his or her acts whose evaluation are low. Thus, the learner can effectively learn the sign languages.

It should be further understood by those skilled in the art that although the foregoing description has been made on embodiments of the invention, the invention is not limited thereto and various changes and modifications may be made without departing from the spirit of the invention and the scope of the appended claims.

In the above description, the method, system and program of the present invention have been explained with reference to Japanese sign language, however, the skilled reader will easily recognize that the concept of the present invention is applicable to any sign language and its correlation to any language or linguistics.

**Claims**

1. A program for realizing a sign language education system in a computer that includes means for inputting a sign language learner's act information, means for controlling the processing of the input act information, a memory, and a display, the memory having recorded model information comprising information on model sign languages, the program causing the control means to control the steps of:

   extracting a first and a second characteristic point each representing an end of an act from the model information (801);
   obtaining the learner's act information through the input means, producing a sign language animation image from the act information and displaying the sign language animation image on the display (FIG. 6) ;
   producing a sign language animation image from the model information and displaying the sign language animation image on the display (804);
   determining whether or not the act information is at a position of the first characteristic point (804);
   determining whether or not the act information is at a position of the second characteristic point (811);
   calculating a difference in locus between the model information and the act information ranging from the first characteristic point to the second one when the act information is at the position of the second characteristic point (815); and
   continuing the above processing by handling the second characteristic as the first characteristic point and a next characteristic point extracted from the model information as the second characteristic point when the difference in locus is smaller than a predetermined value, and repeating the above processing by using the first and second characteristic points when the difference is greater than the predetermined value (816).

2. The program according to claim 1, wherein before a flow of all the steps mentioned above, the control means is caused to control the steps of:

   inputting sign language learner's act information for a plurality of frames from the input means (806) ;
   calculating an act speed from the inputted act information (807); and
   changing speed parameters of the model information based on the calculated speed (FIG. 11).

3. The program according to claim 2, wherein the step of changing the speed parameters of the model information comprises changing the speed parameters so that the speed of the learner's act information is greater than the speed of the model information (FIG. 11).

4. The program according to claim 1, wherein the step of producing and displaying a sign language animation image from the model information comprises repeatedly displaying the sign language animation image produced from the model information between the first and second characteristic points when the model information is different from the act information between the first characteristic point and the second one by more than a predetermined value.

**5.** A program for realizing a sign language education system in a computer, preferably according to any of claims 1 to 3, that comprises a memory, control means for controlling the processing of information to be recorded on the information recording means, and a display, the memory storing a learner's act information and model information comprising information on a model sign language,
said program causing the control means to perform the steps of:

accessing the model information and the act information (801); calculating a difference between these informations (815);
determining a type of displaying each frame based on a result of the calculation (FIG. 18);
producing a sign language animation image from the model information and the act information (1802); and
displaying the sign language animation image in the determined type of display on the display (1802).

**6.** The program according to claim 5, wherein:

the memory stores a plurality of comments beforehand; and
said program comprising the steps of:

selecting a comment corresponding to the result of the calculation; and
displaying the selected comment on the display.

**7.** Sign language education system that includes means for inputting a sign language learner's act information, control means (115) for controlling the processing of the input act information, a memory (108), and a display (114), the memory storing model information comprising information on model sign languages, the control means controlling the steps of:

extracting a first and a second characteristic point each representing an end of an act from the model information (801);
obtaining the learner's act information through the input means, producing a sign language animation image from the act information and displaying the sign language animation image on the display (FIG. 6) ;
producing a sign language animation image from the model information and displaying the sign language animation image on the display (804);
determining whether or not the act information is at a position of the first characteristic point (804);
determining whether or not the act information is at a position of the second characteristic point (811);
calculating a difference in locus between the model information and the act information ranging from the first characteristic point to the second one when the act information is at the position of the second characteristic point (815); and
continuing the above processing by handling the second characteristic as the first characteristic point and a next characteristic point extracted from the model information as the second characteristic point when the difference in locus is smaller than a predetermined value, and repeating the above processing by using the first and second characteristic points when the difference is greater than the predetermined value (816).

**8.** Sign language education system preferably according to claim 7, comprising:

a display (114);
a memory (108) recording a learner's act information and model information comprising information on a model sign language,
means (115) for reading the model information and the act information from the information storage means and calculating a difference between these informations;
means (115) for determining a type of displaying each frame based on a result of the calculation;
means (115) for producing a sign language animation image from the model information and the act information; and
means (115) for displaying the sign language animation image in the determined type of displaying on said display.

**9.** Sign language education system according to claim 7 or 8, wherein before the flow of all of the processing steps in accordance with claim 7, the control means (115) control the steps of:

inputting sign language learner's act information for a plurality of frames from the input means (806) ;
calculating an act speed from the inputted act information (807); and
changing speed parameters of the model information based on the calculated speed (FIG. 11).

**10.** Sign language education system according to claim 9, wherein the step of changing the speed parameters of the model information comprises changing the speed parameters so that the speed of the learner's act information is greater than the speed of the model information (FIG. 11).

**11.** Sign language education system according to any of claims 7 to 10, wherein the step of producing and displaying a sign language animation image from the model information comprises repeatedly displaying the sign language animation image produced from the model information between the first and second characteristic points, preferably hand position points, when the model information is different from the act information between the first characteristic point and the second one by more than a predetermined value.

**12.** Sign language education system according to any of claim 7 to 11, wherein the control means controlling the processing of information to be recorded on the information recording means perform the steps of:

accessing the model information and the act information (801); calculating a difference between these informations (815);
determining a type of displaying each frame based on a result of the calculation (FIG. 18);
producing a sign language animation image from the model information and the act information (1802); and
displaying the sign language animation image in the determined type of display on the display (1802).

**13.** Sign language education system according to claim 12, wherein
the memory stores a plurality of comments beforehand, and
the control means (115) are acting to select a comment corresponding to the result of the calculation, and to display the selected comment on the display.

# FIG. 1

VIDEO CAMERA — 101
GLOBE-TYPE INPUT DEVICE — 103
KEYBOARD — 105
MOUSE — 106
DISPLAY — 114

102 — IMAGE RECOGNITION DEVICE
104 — HAND ACT INPUT DEVICE
107 — INPUT CONTROL DEVICE
115 — PROCESSOR
113 — PICTURE CONTROL DEVICE

108 — MODEL INFO
109 — LEARNING HISTORY INFO

110 — SIGN LANGUAGE RECOGNITION PROGRAM
111 — SIGN LANGUAGE PRODUCING PROGRAM
112 — CONTROL PROGRAM

EP 1 351 209 A2

# FIG. 2

| | |
|---|---|
| ILLUSTRATIVE CONVERSATION SENTENCE NAME | 201 |
| NUMBER OF SIGN LANGUAGES | 202 |
| TALKER 1 | 203 |
| SIGN LANGUAGE SENTENCE NAME 1 | 204 |
| . . . | |
| TALKER n | 205 |
| SIGN LANGUAGE SENTENCE NAME n | 206 |
| EXPLANATORY SENTENCE | 207 |

# FIG. 3

| | |
|---|---|
| SIGN LANGUAGE SENTENCE NAME | 301 |
| JAPANESE SENTENCE | 302 |
| NUMBER OF SIGN LANGUAGE WORDS | 303 |
| SIGN LANGUAGE WORD NAME 1 | 304 |
| . . . | |
| SIGN LANGUAGE WORD NAME n | 304n |
| EXPLANATORY SENTENCE | 305 |

# FIG. 4

SIGN LANGUAGE EDUCATION SYSTEM MENU

ILLUSTRATIVE CONVERSATION SENTENCE 1
ILLUSTRATIVE CONVERSATION SENTENCE 2
ILLUSTRATIVE CONVERSATION SENTENCE 3
ILLUSTRATIVE CONVERSATION SENTENCE 4

401

END 402

# FIG. 5

501 502

ILLUSTRATIVE
CONVERSATION SENTENCE 1

GOOD MORNING.

HOW DO YOU DO?

MY NAME IS TANAKA.

WHAT IS YOUR NAME,
MAY I ASK?

503

"GOOD MORNING" IS EXPRESSED
BY AN ACT MEANING "MORNING"
AND AN ACT MEANING "GREETING".

504

| REPLAY | PAUSE | STOP | RETRACE | FEED | ACT PRACTICE | ACT EVALUATE | END |

505 506 507 508 509 510 511 512

# FIG. 6

601  602

| INPUT START | INPUT STOP |

SIGN LANGUAGE ANIMATION

603 ☐ SHAPE  606 ☐ MIRROR IMAGE
605 ☐ DIRECTION
■ POSITION

608  609
607

JAPANESE SENTENCE  604

# FIG. 7

720  721  722

| TIME | | t1 | t2 | ⋯ | tn | |
|------|---|----|----|----|----|---|
| 701 HAND'S POSITION | x | | | | | 702 |
| | y | | | | | 703 |
| | z | | | | | 704 |
| 705 HAND'S DIRECTION | $\alpha$ | | | | | 706 |
| | $\beta$ | | | | | 707 |
| | $\gamma$ | | | | | 708 |
| 709 FINGER'S BEND | $\alpha 1$ | | | | | 710 |
| | $\beta 1$ | | | | | 711 |
| | $\alpha 2$ | | | | | 712 |
| | $\beta 2$ | | | | | 713 |
| | $\alpha 3$ | | | | | 714 |
| | $\beta 3$ | | | | | 715 |
| | $\alpha 4$ | | | | | 716 |
| | $\beta 4$ | | | | | 717 |
| | $\alpha 5$ | | | | | 718 |
| | $\beta 5$ | | | | | 719 |

# FIG. 8

START

EXTRACT CHARACTERISTIC
POINTS FROM MODEL ACT DATA — 801

i ← 1 — 802

803
i >
NUMBER
OF CHARACTERISTIC
POINTS?    YES

NO    804

END

SENSE THAT LEARNER'S HAND MOVED TO
POSITION OF CHARACTERISTIC POINT i

SENSE START OF ACTION — 805

READ LEARNER'S ACT DATA FOR 3 FRAMES — 806

CALCULATE SPEED CHANGE MODEL — 807

s ← 3 — 808

DISPLAY IMAGE IN S-TH FRAME — 809

READ & DISPLAY SIGN LANGUAGE
DATA FOR ONE FRAME — 810

811
IS HAND
AT POSITION OF
CHARACTERISTIC
POINT (i+ 1) ?    NO

YES    812

COMPARE LEARNER'S
ACT DATA TO MODEL
ACT DATA BETWEEN
POINTS i AND (i+1) — 815

s ← s+1

816
IS
DIFFERENCE
IN LOCUS IN
ACCEPTABLE
RANGE?

NO

813
S >
THE NUMBER OF
FRAMES AT
CHARACTERISTIC
POINT (i+1) ?    NO

YES

i ← i+1 — 817

YES

s ← 1 — 814

17

# FIG. 9

# FIG. 10

# FIG. 11

```
            ┌─────────────┐
            │    START    │
            └──────┬──────┘
                   │
            ┌──────┴──────┐
            │    j←1      │
            │    l←0      │────1101
            │    r←0      │
            └──────┬──────┘
                   │
                  1102
            ┌──────┴──────┐   YES
   ────────│   j≦M ?     │──────────────┐
  │        └──────┬──────┘               │
  │            NO │                      │
  │               │                      │
1106       ┌──────┴──────┐               │
  │        │   r←l       │────1104       │
┌─┴────┐   │  l←l+D(j-1,j)│              │
│j←j+1 │   └──────┬──────┘              1103
└──┬───┘       1105│                     │
   │        ┌──────┴──────┐   ┌──────────┴──────┐
   │   NO   │  l≧L(n) ?   │   │  R(N)←Q(M)      │
   └────────│             │   └─────────────────┘
            └──────┬──────┘
               YES │
            ┌──────┴──────────────────┐
            │ FIND HAND'S POSITION,    │────1107
            │ DIRECTION AND SHAPE FOR L(n)│
            └──────┬──────────────────┘
                   │
            ┌──────┴──────┐
            │     END     │
            └─────────────┘
```

# FIG. 12

# FIG. 13

ILLUSTRATIVE
CONVERSATION SENTENCE 1

1301

PLEASE INPUT YOUR
SIGN LANGUAGE ACTS

STOP

1302

| GOOD MORNING. |
| HOW DO YOU DO? |
| MY NAME IS TANAKA. |
| WHAT IS YOUR NAME, MAY I ASK? |

| REPLAY | PAUSE | STOP | RETRACE | FEED. |

| ACT PRACTICE | ACT EVALUATE | END |

# FIG. 14

1401

PLEASE, MOVE YOUR
HANDS TO START POSITIONS.

STOP

1402

PLEASE INPUT YOUR
HAND ACTS.

STOP

1403

SIGN LANGUAGE DATA IS
UNDER INPUT.

STOP

1404

INPUTTING SIGN LANGUAGE
DATA HAS ENDED.

STOP

# FIG. 15

| | |
|---|---|
| SIGN LANGUAGE SENTENCE NAME | 1501 |
| TOTAL EVALUATION | 1502 |
| NUMBER OF SIGN LANGUAGE WORDS | 1503 |
| EVALUATION OF SIGN LANGUAGE WORD 1 | 1504 |
| . . . | |
| EVALUATION OF SIGN LANGUAGE WORD n | 1505 |

# FIG. 16

| | |
|---|---|
| SIGN LANGUAGE SENTENCE NAME | 1601 |
| NUMBER OF HISTORIES | 1602 |
| RESULT OF EVALUATION 1 OF SIGN LANGUAGE SENTENCE | 1603 |
| SIGN LANGUAGE ACT DATA 1 | 1604 |
| . . . | |
| RESULT OF EVALUATION n OF SIGN LANGUAGE SENTENCE | 1605 |
| SIGN LANGUAGE ACT DATA n | 1606 |

# FIG. 17

# FIG. 18

## FIG. 19

1901     1902     1903

1905

1904

## FIG. 20

2001

ONE OF YOUR
HANDS IS AT A
WRONG POSITION.

## FIG. 21

2101

2102